# FASCICULE DE BREVET EUROPEEN

(11) **EP 1 327 803 B1**
(45) Date de publication et mention de la délivrance du brevet: **28.06.2006**
(21) Numéro de dépôt: 03290067.2
(22) Date de dépôt: 10.01.2003
(51) Int. Cl.: F16K 1/30

(54) **Robinet pour bouteille de gaz sous pression**
Ventil für Druckbehälter
Valve for pressure bottle

(30) Priorité: 11.01.2002 FR 0200292
(43) Date de publication de la demande: 16.07.2003
(73) Titulaire: GCE SAS, 58404 La Charité sur Loire Cedex (FR)
(72) Inventeur: Rousselin, Guy, 18140 Herry (FR)
(74) Mandataire: Debay, Yves

(56) Documents cités:
- EP-A- 0 869 310
- US-A- 4 402 340
- PATENT ABSTRACTS OF JAPAN vol. 018, no. 594 (M-1703), 14 novembre 1994 (1994-11-14) & JP 06 221450 A (HAMAI:KK), 9 août 1994 (1994-08-09)
- PATENT ABSTRACTS OF JAPAN vol. 1998, no. 11, 30 septembre 1998 (1998-09-30) & JP 10 159991 A (DAITO VALVE SEISAKUSHO:KK), 16 juin 1998 (1998-06-16)

## Description

La présente invention concerne un dispositif d'obturation utilisable notamment dans un dispositif de robinet pour bouteille de gaz sous pression. La présente invention concerne plus particulièrement un clapet d'obturation pour un dispositif de robinet à détendeur intégré pour bouteille d'oxygène comprimé destiné notamment dans le cas d'oxygénothérapie en milieu médical.

Il est connu dans l'art antérieur des dispositifs de robinet pour bouteille de gaz sous pression. Ces robinets comportent en général un volant ou bouton de commande actionné en rotation par l'utilisateur pour commander un clapet d'obturation de l'arrivée de gaz. Le clapet est en général solidaire du volant de commande par l'intermédiaire d'un axe vanne. Le clapet est donc très souvent actionné en rotation en même temps que le volant jusqu'à venir obturer l'arrivée de gaz. Les clapets comportent en général sur leur extrémité d'obturation une garniture venant s'appliquer sur le siège d'arrivée du gaz. Lorsque l'utilisateur visse le volant de manière excessive pour bien fermer la vanne, le siège du conduit d'arrivée a tendance à s'enfoncer dans la garniture. Lorsque l'utilisateur souhaite ensuite ouvrir la vanne, Il peut s'avérer difficile de tourner le volant de commande, du fait de l'enfoncement de ce dernier dans la garniture du clapet et donc des multiples frottements existants entre le clapet et le siège du conduit.

Il est connu, par le document US 4 402 340, une vanne d'obturation sensible à la pression pour bouteille de gaz sous pression. La commande manuelle permet de déplacer en translation un arbre du corps de valve. Ce corps de valve vient s'appuyer sur l'élément d'obturation permettant d'obturer l'arrivée de gaz. Typiquement, ce type de vanne peut poser des problèmes liés à l'enfoncement du siège dans la garniture, le décollement du clapet pouvant devenir très difficile.

Il est également connu, par le document EP 0 112 765, un dispositif à vanne proposant un ressort dissocié de l'élément d'entraînement du piston d'obturation. Ceci permet d'exercer une force constante sur le piston et d'améliorer la régulation de l'ouverture de vanne. Toutefois, ce type de dispositif utilisant un piston ne correspond pas à une solution utilisable pour les dispositifs de robinet pour bouteille de gaz sous pression dotés de clapets spécifiques du type ayant une garniture à leur extrémité d'obturation.

L'invention a pour but de proposer un dispositif d'obturation utilisable dans un dispositif de robinet de gaz qui pallie les inconvénients de l'art antérieur.

Ce but est atteint par un dispositif d'obturation d'arrivée de gaz utilisable dans un dispositif de robinet pour bouteille de gaz sous pression, ayant une liberté de translation entre une position extrême d'obturation de l'arrivée de gaz et, pour l'ouverture de l'arrivée du gaz, une position extrême de butée ou une position intermédiaire déterminée par la position d'un élément réglable en translation par action d'un volant, caractérisé en ce qu'il comporte :
- un clapet de type tige cylindrique mobile en translation pour obturer par son extrémité inférieure l'arrivée de gaz, ladite extrémité inférieure du clapet incluant un épaulement,
- une pièce à corps cylindrique creux entourant de façon coaxiale ledit clapet et dotée d'une extrémité inférieure formant une surface de butée pour ledit épaulement dans ladite position extrême du dispositif pour l'ouverture de l'arrivée du gaz,
- un ressort disposé autour de la pièce entourant le clapet, le ressort ayant une première extrémité en appui sur un épaulement de ladite pièce et une deuxième extrémité s'étendant au-delà de l'extrémité supérieure de ladite pièce, et
- des moyens de compression dudit ressort prévus sur le clapet, à une extrémité supérieure du clapet dépassant de ladite pièce.

Selon une autre particularité, la position intermédiaire est déterminée par l'élément formant une butée dite intermédiaire commandée en déplacement par action du volant.

Selon une autre particularité, le volant comprend des moyens de commande du déplacement de la butée intermédiaire, constitués d'un axe vanne solidaire du volant.

Selon une autre particularité, les moyens de compression du ressort sont disposés près d'une extrémité dite haute opposée à l'extrémité d'obturation du clapet pour comprimer le ressort lorsque l'extrémité libre, dite deuxième extrémité, de l'axe vanne vient appuyer sur l'extrémité haute du clapet.

Selon une autre particularité, une extrémité, dite première extrémité, de l'axe vanne est fixée sur le volant, la deuxième extrémité de l'axe vanne, formant la butée intermédiaire, étant solidaire en rotation de la première extrémité et libre en translation par rapport à celle-ci, la deuxième extrémité de l'axe vanne étant vissée dans un corps de dispositif de robinet, une rotation du volant commandant le mouvement hélicoïdal de la deuxième extrémité de l'axe vanne dans le corps du robinet.

Selon une autre particularité, les deux extrémités comportent des crénelages complémentaires les solidarisant en rotation.

Selon une autre particularité, la première extrémité est reliée à la deuxième extrémité par un ressort autorisant la translation de cette dernière par rapport à la première extrémité.

Selon une autre particularité, le volant est actionné en rotation dans les deux sens entraînant dans son mouvement l'axe vanne, le volant dans son mouvement de rotation dans le sens de l'ouverture, commandant dans une première partie de la rotation, l'ouverture de la vanne pour libérer le gaz de la bouteille et dans une deuxième partie de la rotation, le réglage du débit du gaz libéré vers une sortie du robinet.

Selon une autre particularité, au moins deux orifices de calibrage différent sont percés à travers la pièce constituant une première extrémité de l'axe vanne, un troisième orifice étant percé dans le corps du robinet, ce dernier joignant la sortie de gaz, la deuxième partie de rotation du volant de commande mettant en vis-à-vis l'un des deux orifices et le troisième orifice pour déterminer le débit de passage du gaz vers la sortie.

Selon une autre particularité, en position d'ouverture ou de fermeture de la vanne du robinet, il comporte des moyens de maintien, qui lors de l'actionnement du volant, maintiennent le volant en saillie constante par rapport au corps du robinet.

Selon une autre particularité, les moyens de maintien de la saillie du volant par rapport au corps du robinet comportent des moyens de butée au mouvement du volant vers l'intérieur ou vers l'extérieur du corps du robinet.

Selon une autre particularité, le dispositif de robinet comporte un dispositif de détente des gaz placé en aval de la vanne de sortie du gaz de la bouteille.

Selon une autre particularité, le dispositif de robinet comporte, entre le dispositif de détente et la vanne de sortie du gaz de la bouteille, un système à pression résiduelle au-dessous de laquelle un clapet ne laisse plus passer le gaz vers le dispositif de détente.

Selon une autre particularité, le dispositif de robinet comprend un manomètre joint par un conduit situé en amont de la vanne de sortie du gaz pour mesurer la pression dans la bouteille de gaz.

D'autres particularités et avantages de la présente invention apparaîtront plus clairement à la lecture de la description ci-après faite en référence aux dessins annexés dans lesquels :
- la figure 1 représente une vue de côté et en section partielle d'un dispositif de robinet selon l'invention,
- la figure 2 représente une vue de côté et en section partielle d'un dispositif de robinet selon l'invention, selon un plan perpendiculaire à celui de la figure 1,
- la figure 3 représente une vue de dessus et en section partielle du dispositif de robinet selon l'invention, selon A-A sur les figures 1 et 2,
- la figure 4 représente une vue de face d'un volant de commande du robinet selon l'invention,
- les figures 5a et 5b représentent respectivement en vue de dessus et en coupe suivant A-A de la figure 5a, une partie de l'axe vanne utilisé dans le dispositif selon l'invention,
- la figure 6 représente une vue en coupe longitudinale d'un clapet de fermeture de l'arrivée des gaz,
- les figures 7a et 7b représentent en coupe longitudinale, suivant deux plans perpendiculaires, un presse étoupe utilisé dans le dispositif selon l'invention,
- les figures 8a et 8b représentent respectivement en vue de dessus et en coupe longitudinale un écrou presse étoupe utilisé dans le dispositif de robinet selon l'invention.

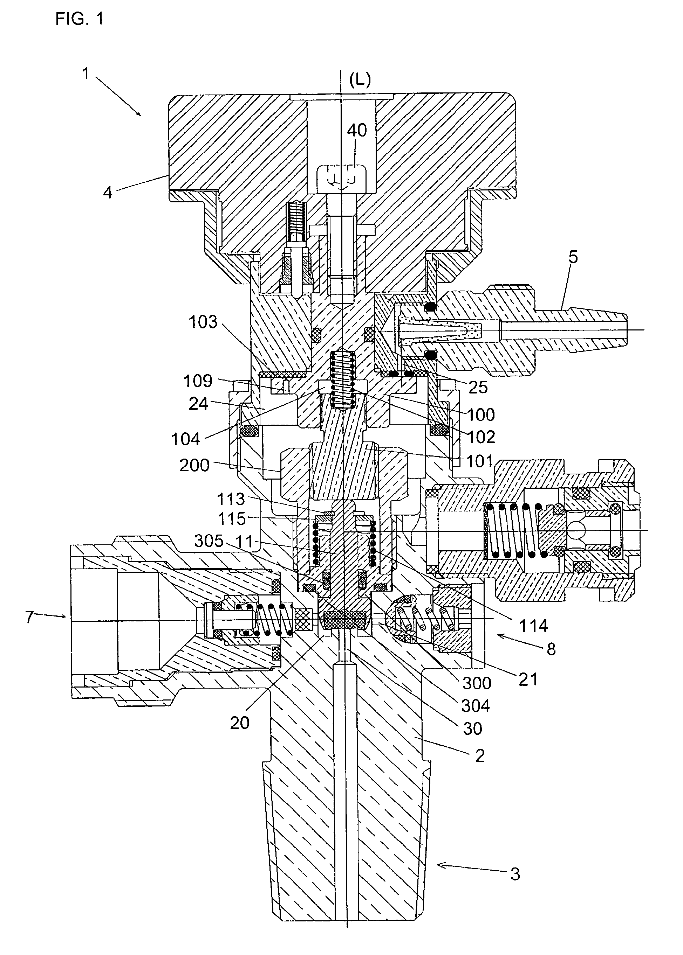

L'invention va à présent être décrite en liaison avec les figures 1 à 8b.

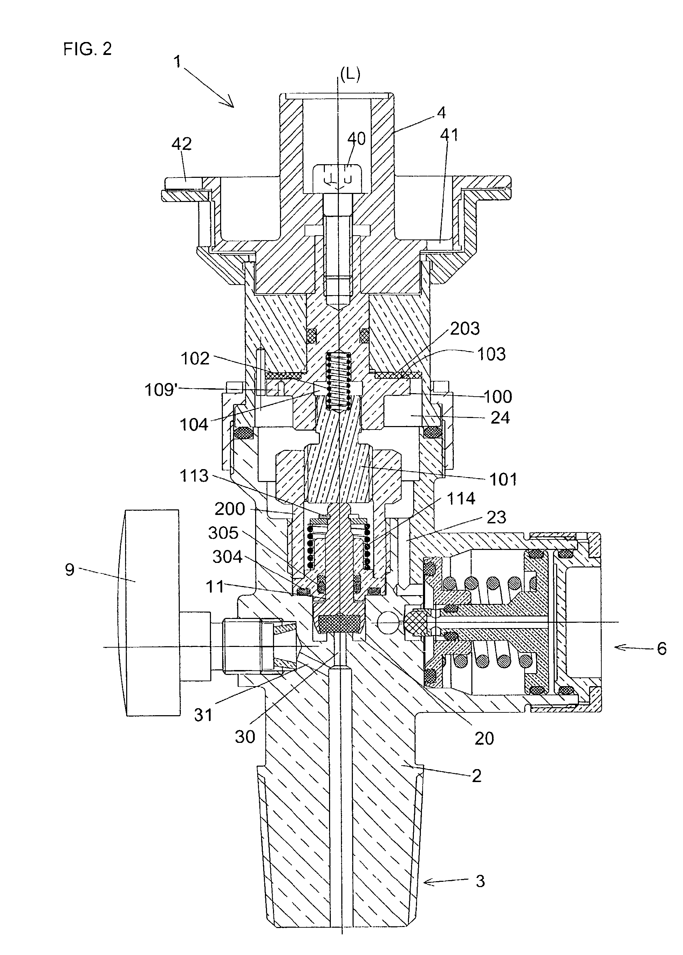

Le dispositif (1, fig.1 et fig.2) de robinet utilisant le dispositif d'obturation selon l'invention, est constitué d'un corps (2) dont la partie inférieure (3) est conique ou sensiblement cylindrique et filetée pour être montée de façon connue sur un orifice de sortie d'une bouteille de gaz. Le dispositif (1) comporte sur sa partie supérieure un volant (4) ou bouton de commande de l'ouverture et de la fermeture de la vanne des gaz. Ce dispositif (1) comporte également un dispositif (6) de détente du gaz délivré ainsi qu'une sortie (5) du gaz détendu du dispositif (1). A titre d'exemple, le dispositif (6) de détente ramène le gaz qui est par exemple à une pression de 200 bar dans la bouteille, à une pression de l'ordre de 3,5 bar. Un orifice (7) de remplissage est également prévu sur le corps (2) du dispositif (1) pour permettre le remplissage de la bouteille de gaz.

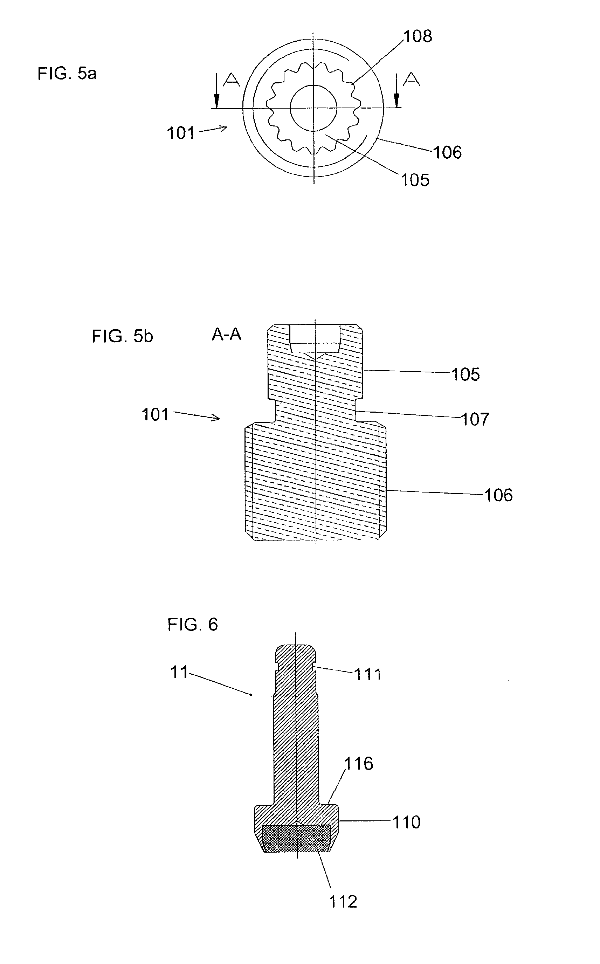

Selon l'invention, le volant (4) ou bouton de commande, lors de son actionnement, par une rotation, commande, par l'intermédiaire d'un axe vanne (10) la translation d'un clapet (11, fig.6) mobile chargé de réaliser l'ouverture ou la fermeture de l'arrivée (30) du gaz provenant de la bouteille. L'axe vanne (10) est constitué de deux parties (100, 101) reliées par des moyens élastiques tels que par exemple un ressort (102). Une première partie (100) de l'axe vanne (10) est solidaire du volant (4) de commande. Cette première partie (100) de l'axe vanne (10) est solidaire en rotation du volant (4) en étant serrée par une de ses extrémités sur celui-ci, par exemple par une vis (40) dont l'extrémité vient se loger dans cette première partie (100). Cette première partie de l'axe vanne (10) est, sous l'action du volant (4), libre en rotation autour de son axe, confondu avec l'axe longitudinal (L) du dispositif (1) selon l'invention. Cette première partie (100) est constituée d'un corps cylindrique comportant un épaulement (103) radial venant en appui, sous l'action du ressort (102), contre un joint (203) s'appuyant également contre le corps (2) du dispositif (1). A l'extrémité opposée à l'extrémité de fixation de cette première partie (100) sur le volant (4) est formé, suivant l'axe (L) du dispositif (1), un trou (104) borgne. Au fond de ce trou (104) borgne est formé un évidement au fond duquel est fixé une extrémité du ressort (102), son autre extrémité étant solidaire de la deuxième partie (101) de l'axe vanne (10). Cette deuxième partie (101, fig. 5a et 5b) comporte sur son extrémité, dite supérieure, un évidement au fond duquel est fixé l'extrémité du ressort (102). Cette deuxième partie (101) comprend un corps cylindrique dont les extrémités (105, 106) sont de diamètres différents. Le diamètre de l'extrémité supérieure (105) est inférieur à celui de l'extrémité inférieure (106) de cette deuxième partie (101). Ces deux extrémités sont séparées par une gorge (107). Un crénelage (108, fig.5a) est formé, suivant l'axe (L) du dispositif, sur la surface extérieure de l'extrémité supérieure (105) de cette deuxième partie (101). L'extrémité supérieure (105) crénelée est destinée à être logée dans le trou (104) borgne de la première partie (100), le trou (104) borgne étant pourvu sur sa surface interne d'un crénelage complémentaire, ces crénelages solidarisant en rotation la première (100) et la deuxième (101) partie de l'axe vanne (10).

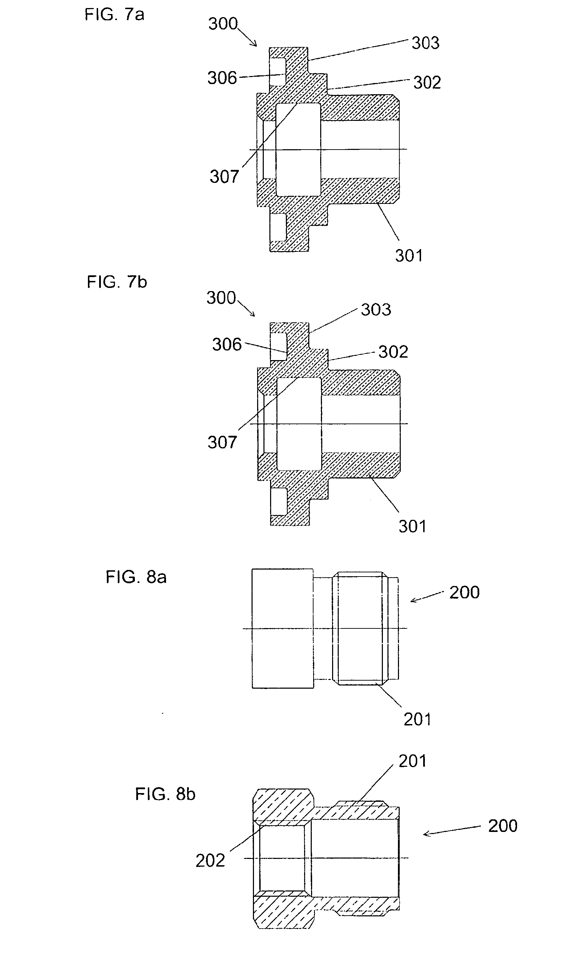

L'extrémité inférieure (106) de la deuxième partie (101) est filetée (109) sur sa surface externe et est vissée sur la portion (202) filetée d'un écrou (200, fig.8a et 8b) presse étoupe solidaire du corps (2) du dispositif
(1). Cet écrou (200) comporte également une portion (201) filetée sur sa surface extérieure venant se visser dans le corps (2) du dispositif (1). L'écrou vissé dans le corps (2) du dispositif vient serrer une pièce (300, fig.7a et 7b) presse étoupe contre le corps du dispositif (1). L'écrou (200) a donc la double fonction de recevoir l'extrémité inférieure (106) filetée de la deuxième partie (101) de l'axe vanne (10) et, en étant vissé sur le corps (2) du dispositif, de serrer la pièce (300) presse étoupe. Cette pièce (300) est constituée d'un corps (301) cylindrique creux, de diamètre inférieur au diamètre interne de l'écrou (200), et comporte, à une certaine distance de son extrémité supérieure et depuis cette extrémité, deux épaulements (302, 303) successifs, de diamètre croissant. L'écrou (200) a son extrémité inférieure vissée dans le corps (2) du dispositif qui vient en appui contre le deuxième épaulement (303) pour appuyer la surface opposée à l'épaulement (303) contre le corps (2) du dispositif (1). L'extrémité supérieure de cette pièce débouche dans l'écrou (200). L'extrémité inférieure du corps (301) de cette pièce (300) vient se loger dans un trou (20) formé dans le corps (2) du dispositif (1). Au fond de ce trou (20) est formé un siège sur lequel débouche le conduit d'arrivée (30) du gaz de la bouteille de gaz. Un conduit (21, fig.1) débouchant dans ce trou (20) et menant à un dispositif de pression résiduelle est formé dans le corps (2) du dispositif (1). Une gorge (306, fig.7a et fig.7b) annulaire est formée autour de l'axe du dispositif (1) sur la surface opposée au deuxième épaulement (303). Dans cette gorge (306) est disposé un joint (304, fig.1 et fig.2) torique chargé de faire l'étanchéité entre la pièce (300) et le corps (2) du dispositif (1). Une autre gorge (307) annulaire est formée autour de l'axe (L) du dispositif (1) sur la surface interne de la pièce (300). Un joint (305) torique est également disposé dans cette gorge pour faire l'étanchéité entre le clapet (11) et la pièce (300). Les joints (304, 305) permettent d'éviter la propagation du gaz haute pression dans le dispositif (1) et le mélange du gaz haute pression avec le gaz détendu. Le clapet (11, fig.6) est constitué d'une tige cylindrique, dont l'axe est confondu avec l'axe (L) du dispositif (1), comportant à son extrémité inférieure une portion (110) de diamètre plus important formant un épaulement (116). La tige est introduite coaxialement dans la pièce (300) de sorte que son épaulement (116) puisse venir en butée contre la face inférieure de la pièce (300). La face inférieure de la tige du clapet (11) est percée d'un trou borgne dans lequel est logée une garniture (112) cylindrique en matériau thermoplastique ou en élastomère, sertie dans le clapet (11). En position de fermeture de la vanne, cette garniture vient s'appuyer contre le siège formé au fond du trou (20). Une gorge (111) annulaire est formée autour de l'axe (L) du dispositif (1) à proximité de l'extrémité supérieure de la tige du clapet (11). Dans cette gorge (111) est placé un circlip (113). Un ressort (114) entoure le corps (301) de la pièce (300) et vient en appui par son extrémité inférieure contre le premier épaulement (302) formé sur la pièce (300). Une rondelle (115) de diamètre équivalent à la section du ressort est placée entre l'extrémité supérieure du ressort (114) et le circlip (113). Le débattement maximum en translation du clapet (111) par rapport à la pièce (300) est très faible, pouvant aller de la position d'appui de la face inférieure de la garniture (112) du clapet (11) sur le siège pour obturer le conduit d'arrivée (30) du gaz à une position ouverte dans laquelle l'épaulement (116) du clapet vient en butée contre la face inférieure de la pièce (300).

En position de fermeture de la vanne, la garniture du clapet est en appui sur le siège du conduit d'arrivée (30) de gaz. Le clapet est alors en position basse. Dans cette position, l'extrémité supérieure du clapet (11) est en simple contact avec la face inférieure de la deuxième partie (101) de l'axe vanne (10) et suivant le vissage de l'extrémité inférieure (106) de la deuxième partie (101), le ressort (114) entourant la pièce (300) est plus ou moins comprimé.

Lors de la rotation du volant (4) de commande dans le sens de l'ouverture de la vanne, la rotation de l'axe vanne (10) solidaire du volant (4) provoque le dévissage, donc la remontée dans l'écrou (200), de l'extrémité inférieure (106) de la deuxième partie (101) de l'axe vanne (10). L'extrémité supérieure du clapet (11) étant, dans la position de fermeture de la vanne, simplement en contact avec la face inférieure de la deuxième partie (101) de l'axe vanne (10), l'action de la pression du gaz présent dans la bouteille ou l'action du ressort (114) permet la remontée du clapet qui coulisse suivant l'axe (L) du dispositif dans la pièce (300). Ce coulissement s'effectue jusqu'à ce que l'épaulement (116) formé sur le clapet (11) vienne en butée contre la face inférieure de la pièce (300) et/ou jusqu'à ce que l'extrémité supérieure du clapet (11) vienne en butée contre l'extrémité inférieure (106) de la deuxième partie (101) de l'axe vanne (10). Le conduit d'arrivée (30) de gaz n'est plus obturé et le gaz peut sortir de la bouteille.

Pour fermer la vanne, l'utilisateur tourne le volant dans l'autre sens pour venir visser l'extrémité inférieure (106) de la deuxième partie (101) de l'axe vanne pour la faire descendre et ainsi venir appuyer sur l'extrémité supérieure du clapet pour pousser le clapet (11). La garniture (112) du clapet vient alors obturer le conduit d'arrivée (30) de la bouteille. Le vissage pourra avoir lieu par exemple jusqu'à ce que la rondelle (115) vienne en appui contre la face supérieure de la pièce (300). Lors de la fermeture de la vanne, plus l'utilisateur vient appuyer sur le clapet, plus le ressort (114) est comprimé et plus le siège du conduit (30) d'arrivée de gaz s'enfonce dans la garniture (112) du clapet. Lorsque l'utilisateur souhaite ouvrir la vanne, alors que le siège est bien enfoncé dans la garniture (112) du clapet (11), le décollement de la garniture (112) sous la pression unique du gaz à haute pression peut s'avérer difficile. Le ressort (114) permet donc de favoriser ce décollement en se détendant lorsque la translation du clapet (11) est permise, c'est-à-dire lorsque l'extrémité inférieure de la première partie (101) de l'axe vanne (10) est remontée d'une certaine distance en étant dévissée de l'écrou (200).

Selon l'invention, le volant lors de sa rotation dans le sens de l'ouverture ou de la fermeture fait saillie constante par rapport au corps (2) du dispositif (1). Ceci est permis grâce au ressort (102) reliant les deux parties (100, 101) de l'axe vanne (10). En effet, dans le cas par exemple du dévissage de l'extrémité inférieure de la deuxième partie dans l'écrou (200), la première partie (100) étant bloquée en translation vers l'extérieur et vers l'intérieur du dispositif (1), la remontée de la deuxième partie (101) est autorisée par la compression du ressort (102). Dans le cas du vissage de l'extrémité inférieure de la deuxième partie dans l'écrou (200), la descente de la deuxième partie (101) est permise par l'extension du ressort (102) reliant les deux parties (100, 101).

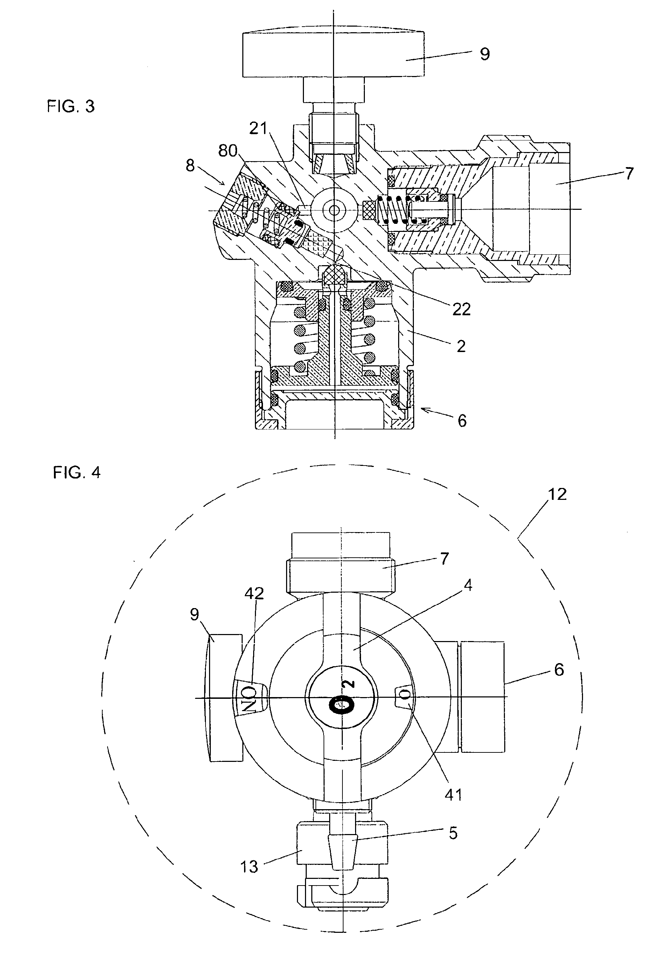

Selon l'invention, une première partie de rotation du volant (4) de commande permet de libérer le gaz haute pression de la bouteille de gaz. Une fois libérée, ce gaz passe par le conduit (21) formé dans le corps (2) du dispositif et débouchant par exemple dans un dispositif (8) de pression résiduelle. De manière connue, un tel dispositif permet de ne jamais vider complètement la bouteille. En effet, dans le cas de bouteille d'oxygène à usage médical, il est nécessaire d'éviter la contamination de l'intérieur des bouteilles. Pour cela, la bouteille de gaz est conservée sous pression en y maintenant toujours une certaine quantité de gaz. Pour l'utilisateur la bouteille sera vide alors qu'elle ne l'est pas réellement. En fait, une certaine quantité de gaz sous pression sera toujours dans la bouteille. Pour cela le dispositif (8) intégré au dispositif (1) de l'invention comprend un clapet (80, fig.3) monté sur un ressort. Lorsque le gaz arrive du conduit (21), la pression du gaz pousse le clapet (11) pour passer. Lorsqu'il ne reste que très peu de gaz dans la bouteille, la pression du gaz n'est plus suffisante pour pousser le clapet (80) du dispositif (8). Le gaz ne passe plus et reste donc dans la bouteille. Le ressort aura par exemple une constante de raideur définissant la pression, par exemple de 3 ou 4 bar, en dessous de laquelle le clapet (80) ne se déplace plus en translation. Ce dispositif (8) permet de ne pas contaminer la bouteille et celle-ci peut alors être remplie par l'orifice (7) de remplissage sans être nettoyée.

Une fois que le gaz haute pression est passé à travers le dispositif à pression résiduelle, un conduit (22, fig.3) formé dans le corps (2) du dispositif (1) débouche dans le dispositif (6) de détente de gaz. Le gaz est alors détendu.

Une fois détendu, par exemple à 3 ou 4 bar, le gaz détendu rejoint par un conduit (23, fig.2) un logement (24) formé dans le corps (2) du dispositif (1). De là, une deuxième partie de rotation du volant (4) de commande permet de laisser sortir le gaz par la sortie (5) du dispositif.

Selon l'invention, cette deuxième partie de rotation permet de régler le débit de sortie du gaz détendu. Ce débit sera par exemple affiché sur une fenêtre (41, fig.2 et fig.4) spécifique du volant (4) de commande.

Plusieurs orifices (109, 109') de calibres différents sont par exemple percés suivant un arc de cercle, parallèlement à l'axe (L) du dispositif (1), à travers la première partie (100) de l'axe vanne (10) par exemple au niveau de l'épaulement radial (103) de cette pièce. Ces orifices sont de calibres différents, c'est-à-dire qu'ils sont de diamètre égaux mais comportent chacun une section supérieure ouverte différente. Un conduit (25, fig.1) est formé suivant l'axe (L) du dispositif (1) dans le corps (2) du dispositif, ce conduit (25) débouchant sur la sortie (5) du gaz. Ce conduit (25) est de diamètre au moins égal à la plus grande des sections supérieures des orifices (109, 109'). En vis-à-vis de ce conduit (25), le joint d'étanchéité (fig.1), disposé entre la première partie (100) de l'axe vanne (10) et le corps (2) du dispositif, est également percé d'un orifice correspondant. Comme déjà décrit plus haut, la première partie de la rotation du volant (4) permet d'ouvrir la vanne et de libérer le gaz haute pression qui est alors détendu. La deuxième partie de la rotation met en vis-à-vis un des orifices (109, 109') formés à travers la première partie (100) de l'axe vanne et le conduit (25) formé dans le corps du dispositif (1). Le gaz détendu présent dans le logement (24) formé dans le corps du dispositif (1) peut alors passer dans l'orifice (109, 109') placé en vis-à-vis puis dans le conduit de sortie (5). Le volant comprendra par exemple des taquets d'arrêt placés correspondant chacun à la position en vis-à-vis d'un orifice (109, 109') par rapport au conduit (25), à chaque taquet correspondant également l'inscription dans la fenêtre (41, figure 4) visible sur le volant (41), du débit réglé par l'orifice (109, 109') placé en vis-à-vis du conduit (25).

Selon l'invention, le conduit d'arrivée (30) de gaz dans la bouteille comprend un conduit (31) parallèle menant à un manomètre (9) pour mesurer la pression du qaz contenu dans la bouteille.

Sur la figure 4, on peut voir, en vue de dessus, le dispositif (1) de robinet selon l'invention. Le dispositif est ici adapté sur une bouteille (12) d'oxygène dessinée en pointillés. Sur cette figure, on peut voir le manomètre (9) servant à mesurer la pression, le raccord (7) de remplissage de la bouteille, le raccord (5) de sortie du gaz, le dispositif (6) de détente et un raccord (13) rapide pour raccorder divers accessoires, placé juste au-dessous du raccord (5) de sortie du gaz. On peut voir également une fenêtre (42, fig.2) dans laquelle est indiqué si la vanne est ouverte ou non, et la fenêtre (41) d'affichage du débit.

## Revendications

1. Dispositif d'obturation d'arrivée de gaz utilisable dans un dispositif
(1) de robinet pour bouteille de gaz sous pression, ayant une liberté de translation entre une position extrême d'obturation de l'arrivée de gaz et, pour l'ouverture de l'arrivée du gaz, une position extrême de butée ou une position intermédiaire déterminée par la position d'un élément réglable en translation par action d'un volant (4), **caractérisé en ce qu'**il comporte :
- un clapet (11) de type tige cylindrique mobile en translation pour obturer par son extrémité inférieure l'arrivée de gaz, ladite extrémité inférieure du clapet (11) incluant un épaulement (116),
- une pièce (300) à corps cylindrique creux entourant de façon coaxiale ledit clapet (11) et dotée d'une extrémité inférieure formant une surface de butée pour ledit épaulement (116) dans ladite position extrême du dispositif pour l'ouverture de l'arrivée du gaz,
- un ressort (114) disposé autour de la pièce (300) entourant le clapet, le ressort (114) ayant une première extrémité en appui sur un épaulement de ladite pièce (300) et une deuxième extrémité s'étendant au-delà de l'extrémité supérieure de ladite pièce (300), et
- des moyens (113, 115) de compression dudit ressort (114) prévus sur le clapet (11), à une extrémité supérieure du clapet (11) dépassant de ladite pièce (300).

2. Dispositif selon la revendication 1, **caractérisé en ce que** la position intermédiaire est déterminée par l'élément formant une butée dite intermédiaire commandée en déplacement par action du volant.

3. Dispositif selon la revendication 2, **caractérisé en ce que** le volant (4) comprend des moyens de commande du déplacement de la butée intermédiaire, constitués d'un axe vanne (10) solidaire du volant (4).

4. Dispositif selon la revendication 3, **caractérisé en ce que** les moyens (113, 115) de compression du ressort (114) sont disposés près d'une extrémité dite haute opposée à l'extrémité d'obturation du clapet (11) pour comprimer le ressort (114) lorsque l'extrémité (101) libre, dite deuxième extrémité, de l'axe vanne (10) vient appuyer sur l'extrémité haute du clapet (11).

5. Dispositif selon la revendication 3 ou 4, **caractérisé en ce qu'**une extrémité, dite première extrémité (100), de l'axe vanne (10) est fixée sur le volant (4), la deuxième extrémité (101) de l'axe vanne (10), formant la butée intermédiaire, étant solidaire en rotation de la première extrémité (100) et libre en translation par rapport à celle-ci, la deuxième extrémité (101) de l'axe vanne (10) étant vissée dans un corps (2) de dispositif (1) de robinet, une rotation du volant (4) commandant le mouvement hélicoïdal de la deuxième extrémité (101) de l'axe vanne (10) dans le corps (2) du robinet.

6. Dispositif selon la revendication 5, **caractérisé en ce que** les deux extrémités (100, 101) comportent des crénelages complémentaires les solidarisant en rotation.

7. Dispositif selon la revendication 5 ou 6, **caractérisé en ce que** la première extrémité (100) est reliée à la deuxième extrémité (101) par un ressort (102) autorisant la translation de cette dernière par rapport à la première extrémité (100).

8. Dispositif selon l'une des revendications 5 à 7, **caractérisé en ce que** le volant (4) est actionné en rotation dans les deux sens entraînant dans son mouvement l'axe vanne (10), le volant (4) dans son mouvement de rotation dans le sens de l'ouverture, commandant dans une première partie de la rotation, l'ouverture de la vanne pour libérer le gaz de la bouteille et dans une deuxième partie de la rotation, le réglage du débit du gaz libéré vers une sortie (5) du robinet.

9. Dispositif selon l'une des revendications 5 à 8, **caractérisé en ce qu'**au moins deux orifices (109, 109') de calibrage différent sont percés à travers la pièce constituant une première extrémité (100) de l'axe vanne (10), un troisième orifice (25) étant percé dans le corps (2) du robinet, ce dernier joignant la sortie (5) de gaz, la deuxième partie de rotation du volant (4) de commande mettant en vis-à-vis l'un des deux orifices (109, 109') et le troisième orifice (25) pour déterminer le débit de passage du gaz vers la sortie (5).

10. Dispositif selon l'une des revendications 5 à 9, **caractérisé en ce que**, en position d'ouverture ou de fermeture de la vanne du robinet, il comporte des moyens de maintien, qui lors de l'actionnement du volant (4), maintiennent le volant (4) en saillie constante par rapport au corps (2) du robinet.

11. Dispositif selon la revendication 10, **caractérisé en ce que** les moyens de maintien de la saillie du volant (4) par rapport au corps (2) du robinet comportent des moyens de butée au mouvement du volant (4) vers l'intérieur ou vers l'extérieur du corps (2) du robinet.

12. Dispositif selon l'une des revendications 5 à 11, **caractérisé en ce que** le dispositif (1) de robinet comporte un dispositif (6) de détente des gaz placé en aval de la vanne de sortie (5) du gaz de la bouteille.

13. Dispositif selon l'une des revendications 5 à 12, **caractérisé en ce que** le dispositif (1) de robinet comporte, entre le dispositif de détente et la vanne de sortie du gaz de la bouteille, un système (8) à pression résiduelle au-dessous de laquelle un clapet (80) ne laisse plus passer le gaz vers le dispositif (6) de détente.

14. Dispositif selon l'une des revendications 5 à 13, **caractérisé en ce que** le dispositif (1) de robinet comprend un manomètre (9) joint par un conduit (31) situé en amont de la vanne de sortie du gaz pour mesurer la pression dans la bouteille de gaz.

## Claims

1. Device for shutting off a gas inlet that can be used in a tap device (1) for a pressurised gas bottle, having freedom of translation between an extreme position of shutting off the gas inlet and, for opening the gas inlet, an extreme stop position or an intermediate position determined by the position of an element adjustable in translation by actuating a handwheel (4), **characterised in that** it comprises:
― a valve (11) of the cylindrical stem type, mobile in translation so that, at its lower end, it can shut off the gas inlet, said lower end of the valve (11) including a shoulder (116),
― a part (300) with a hollow cylindrical body coaxially surrounding said valve (11) and provided with a lower end forming a stop surface for said shoulder (116) in said extreme position of the device for opening the gas inlet,
― a spring (114) arranged around the part (300) surrounding the valve, the spring (114) having a first end bearing against a shoulder of said part (300) and a second end extending beyond the upper end of said part (300), and
― means (113, 115) for compressing said spring (114) provided on the valve (11), at an upper end of the valve (11) protruding from said part (300).

2. Device according to Claim 1, **characterised in that** the intermediate position is determined by the element forming a stop, known as intermediate, controlled in displacement by actuating the handwheel.

3. Device according to Claim 2, **characterised in that** the handwheel (4) comprises means for controlling the displacement of the intermediate stop, constituted by a valve axis (10) integral with the handwheel (4).

4. Device according to Claim 3, **characterised in that** the means (113, 115) for compressing the spring (114) are arranged close to an end known as high, opposite the shutting end of the valve (11) in order to compress the spring (114) when the free end (101), known as the second end, of the valve axis (10) bears against the high end of the valve (11).

5. Device according to Claim 3 or 4, **characterised in that** an end, known as the first end (100), of the valve axis (10) is fixed to the handwheel (4), the second end (101) of the valve axis (10), forming the intermediate stop, being integral in rotation with the first end (100) and free in translation with respect thereto, the second end (101) of the valve axis (10) being screwed into a body (2) of a tap device (1), a rotation of the handwheel (4) controlling the helical movement of the second end (101) of the valve axis (10) in the body (2) of the tap.

6. Device according to Claim 5, **characterised in that** the two ends (100, 101) comprise complementary toothing making them integral in rotation.

7. Device according to Claim 5 or 6, **characterised in that** the first end (100) is connected to the second end (101) by a spring (102) permitting the translation of the latter relative to the first end (100).

8. Device according to one of Claims 5 to 7, **characterised in that** the handwheel (4) is actuated in rotation in both directions driving in its movement the valve axis (10), the handwheel (4) in its rotational movement, in the opening direction, controlling the opening of the valve in a first part of the rotation in order to release gas from the bottle and, in a second part of the rotation, the adjustment of the output of gas released towards an outlet (5) of the tap.

9. Device according to one of Claims 5 to 8, **characterised in that** at least two openings (109, 109') of different calibration are made through the part constituting a first end (100) of the valve axis (10), a third opening (25) being made in the body (2) of the tap, the latter joining the gas outlet (5), the second part of rotation of the control handwheel (4) putting one of the two openings (109, 109') and the third opening (25) opposite each other in order to determine the output of gas passing towards the outlet (5).

10. Device according to one of Claims 5 to 9, **characterised in that**, in the opening or closing position of the valve of the tap, it comprises holding means which, when the handwheel (4) is actuated, keep the handwheel (4) projecting by a constant amount with respect to the body (2) of the tap.

11. Device according to Claim 10, **characterised in that** the means for holding the projection of the handwheel (4) with respect to the body (2) of the tap comprise means for stopping the movement of the handwheel (4) towards the inside or outside of the body (2) of the tap.

12. Device according to one of Claims 5 to 11, **characterised in that** the tap device (1) comprises a pressure-reduction device (6) for the gas, placed downstream from the gas outlet valve (5) of the bottle.

13. Device according to one of Claims 5 to 12, **characterised in that** the tap device (1) comprises, between the pressure-reduction device and the gas outlet valve of the bottle, a residual-pressure system (8) below which pressure a valve (80) allows no more gas to pass towards the pressure-reduction device (6).

14. Device according to one of Claims 5 to 13. **characterised in that** the tap device (1) comprises a pressure gauge (9) joined by a conduit (31) located upstream of the gas outlet valve in order to measure the pressure in the gas bottle.

## Patentansprüche

1. Vorrichtung zum Verschließen einer Gaszufuhr, zum Verwenden in einer Absperrvorrichtung (1) für eine Druckgasflasche, mit einer Verschiebefreiheit zwischen einer Endstellung zum Absperren der Gaszufuhr und, zum Öffnen der Gaszufuhr, einer Anschlagendstellung oder einer Zwischenstellung, welche von der Stellung eines durch Betätigung eines Handrads translatorisch einstellbaren Organs bestimmt wird, **dadurch gekennzeichnet, dass** sie folgendes aufweist:
- ein Ventilelement (11) vom Typ einer translatorisch beweglichen zylindrischen Stange, um über dessen unteres Ende die Gaszufuhr zu verschließen, wobei das untere Ende des Ventilelements (11) eine Schulter (116) umfasst,
- ein Teil (300) mit hohlzylindrischem Körper, das das Ventilelement (11) koaxial umgibt und mit einem unteren Ende versehen ist, welches eine Anschlagfläche für die Schulter (116) in der Endstellung der Vorrichtung zum Öffnen der Gaszufuhr bildet,
- eine um das Teil (300) angcordztete und das Ve.ntitelemcnt umgebende Feder (114), wobei die Feder (114) ein erstes Ende, das an einer Schulter des Teils (300) anlicgt, und ein zweites Ende, das sich über das obere Ende des Teils (300) hinaus erstreckt, aufweist, und
- Mittel (113, 115) zum Zusammendrücken der Feder (114), die am Ventilelement (11) an einem oberen Ende des Ventilelements (11) vorgesehen sind, das das Teil (300) überragt.

2. Vorrichtung nach Anspruch 1, **dadurch gekennzeichnet, dass** die Zwischenstellung durch das Element bestimmt ist, das einen durch Betätigung des Handrads verschieblich gesteuerten Zwischenanschlag bildet.

3. Vorrichtung nach Anspruch 2, **dadurch gekennzeichnet, dass** das Handrad (4) Mittel zum Steuern der Verschiebung des Zwischenanschlags aufweisen, welche aus einer mit dem Handrad (4) fest verbundenen Ventilachse (10) bestehen.

4. Vorrichtung nach Anspruch 3, **dadurch gekennzeichnet, dass** die Mittel (113, 115) zum Zusammendrücken der Feder (114) in der Nähe eines Endes, dqas als oberes Ende bezeichnet wird, angeordnet sind, das zum Verschlußende des Ventilelements (11) entgegengesetzt ist, um die Feder (114) zusammenzudrücken, wenn sich das freie, als zweites Ende bezeichnete Ende (101) der Ventilachse (10) an das obenliegende Ende des Ventilelements (11) anlegt.

5. Vorrichtung nach Anspruch 3 oder 4, **dadurch** gekennzaichnet, dass ein als erstes bezeichnetes Ende (100) der Ventilachse (10) am Handrad (4) befestigt ist, wobei das zweite Ende (101) der Ventilachse (10), das den Zwischenanschlag bildet, mit dem ersten Ende (100) drehfest verbunden und zu diesem translatorisch frei ist,
wobei das zweite Ende (101) der Ventilachse (10) in einem Körper (2) der Absperrvorrichtung (1) eingeschraubt ist, wobei eine Drehung des Handrads (4) die schraubenförmige Bewegung des zweiten Endes (101) der Ventilachse (10) im Körper (2) der Absperrvorrichtung steuert.

6. Vorrichtung nach Anspruch 5, **dadurch gekennzeichnet, dass** die beiden Enden (100, 101) komplementäre Auszackungen aufweisen, die sie drehfest verbinden.

7. Vorrichtung nach Anspruch 5 oder 6, **dadurch gekennzeichnet, dass** das erste Ende (100) mit dem zweiten Ende (101) über eine Feder (102) verbunden ist, die die translatorische Verschiebung des zweiten Endes bezüglich des ersten Endes (100) zulässt.

8. Vorrichtung nach einem der Ansprüche 5 bis 7, **dadurch gekennzeichnet, dass** das Handrad (4) in beiden Richtungen drehend betätigt wird und in seiner Bewegung die Ventilachse (10) mitnimmt, wobei das Handrad (4) bei seiner Drehbewegung in Öffnungsrichtung über einen ersten Teil der Drehung das Öffnen des Ventils zum Auslassen von Gas aus der Flasche und über einen zweiten Teil der Drehung das Einstellen der Gasauslassmenge zum Ventil (5) der Absperrvorrichtung steuert.

9. Vorrichtung nach einem der Ansprüche 5 bis 8, **dadurch gekennzeichnet, dass** zumindest zwei unterschiedlich kalibrierte Öffnungen (109, 109') durch das Teil gebohrt sind, das ein erstes Ende (100) der Ventilachse (10) bildet, wobei eine dritte Öffnung (25) in den Körper (2) der Absperrvorrichtung gebohrt ist, wobei letztere auf den Gasauslass (5) trifft, wobei über den zweiten Teil der Drehung des Handrads (4) eine der beiden Öffnungen (109, 109') und die dritte Öffnung (2) der Absperrvorrichtung einander gegenüber gebracht werden, um die Gasdurchflussmenge zum Auslass (5) zu bestimmen.

10. Vorrichtung nach einem der Ansprüche 5 bis 9, **dadurch gekennzeichnet, dass** sie in der Öffnungs- bzw. Schließstellung des Ventils Haltemittel enthält, die bei Betätigung des Handrads (4) das Handrad (4) bezüglich des Körpers (2) der Absperrvorrichtung konstant vorstehend halten.

11. Vorrichtung nach Anspruch 10, **dadurch gekennzeichnet, dass** die Mittel zum Halten des Vorstehens des Handrads (4) bezüglich des Körpers (2) der Absperrvorrichtung Anschlagmittcl für die Bewegung des Handrads (4) nach inncrhalb oder nach außcrhalb des Körpers (2) der Absperrvorrichtung enthalten.

12. Vorrichtung nach einem der Ansprüche 5 bis 11, **dadurch gekennzeichnet, dass** die Absperrvorrichtung (1) eine Gasexpansionseinrichtung (6) cnthält, die dcm Ventil (5) zum Auslassen von Gas aus der Flasche nachgelagcn ist.

13. Vorrichtung nach einem der Ansprüche 5 bis 12, **dadurch gekennzeichnet, dass** die Absperrvorrichtung (1) zwischen Expansionseinrichtung und Ventil zum Auslassen von Gas aus der Flasche ein System (8) für Rcstdruck enthält, unterhalb dessen ein Ventilclcment (80) das Gas nicht mehr zur Expansionscinrichtung (6) durchlässt.

14. Vorrichtung nach einem der Ansprüche 5 bis 13 **dadurch gekennzeichnet, dass** die Absperrvorrichtung (1) ein Manometer (9) enthält, das mit einer Leitung (31) verbunden ist, die dem Ventil zum Auslassen von Gas vorgelagert ist, um den Druck in der Gasflasche zu messen.
